# EUROPÄISCHE PATENTSCHRIFT

(11) **EP 2 809 484 B1**
(45) Veröffentlichungstag und Bekanntmachung des Hinweises auf die Patenterteilung: **21.11.2018**
(21) Anmeldenummer: 13700061.8
(22) Anmeldetag: 03.01.2013
(51) Int. Cl.: B25F 5/02, H02K 7/14

(54) **HANDWERKZEUGMASCHINENVORRICHTUNG**
HAND TOOL MACHINE DEVICE
DISPOSITIF DE MACHINE-OUTIL MANUELLE

(30) Priorität: 03.02.2012 DE 102012201593
(43) Veröffentlichungstag der Anmeldung: 10.12.2014
(73) Patentinhaber: Robert Bosch GmbH, 70442 Stuttgart (DE)
(72) Erfinder: ULLRICH, Andre, 70771 Leinefelden-Echterdingen (DE); RUEBSAAMEN, Holger, 70597 Stuttgart (DE)
(86) Internationale Anmeldenummer: PCT/EP2013/050030
(87) Internationale Veröffentlichungsnummer: WO 2013/113522

(56) Entgegenhaltungen:
- GB-A- 2 268 112
- GB-A- 2 319 669

## Beschreibung

### Stand der Technik

Es sind bereits Handwerkzeugmaschinenvorrichtungen nach dem Oberbegriff des Anspruchs 1 bekannt. So zeigt beispielsweise die GB 2 319 669 A eine Handwerkzeugmaschinenvorrichtung mit einer Antriebseinheit, die zumindest eine Antriebswelle umfasst, mit einer Getriebeeinheit, die zumindest ein Getriebeelement umfasst, mit einer Kühleinheit, die zumindest ein Lüfterelement umfasst, und mit zumindest einem Dichtungselement, das zu einer Dichtung der Getriebeeinheit in zumindest einer Axialrichtung vorgesehen ist, wobei das zumindest eine Lüfterelement zumindest einen Aufnahmebereich aufweist, der dazu vorgesehen ist, das zumindest eine Dichtungselement zumindest teilweise aufzunehmen.

### Offenbarung der Erfindung

Die Erfindung geht aus von einer Handwerkzeugmaschinenvorrichtung nach dem Oberbegriff des Anspruchs 1.

Es wird vorgeschlagen, dass der Aufnahmebereich zumindest ein Mitnahmeelement aufweist, das zu einer Sicherung des zumindest einen Dichtungselements zumindest in einer Umfangsrichtung des Lüfterelements vorgesehen ist. Unter einer "Antriebseinheit" soll in diesem Zusammenhang insbesondere eine Einheit verstanden werden, die dazu vorgesehen ist, eine Bewegung, vorzugsweise eine Rotationsbewegung, insbesondere der Antriebswelle, zu erzeugen. Die Antriebseinheit umfasst vorzugsweise einen Motor, besonders bevorzugt einen Elektromotor. Es sind jedoch auch andere, einem Fachmann als sinnvoll erscheinende Ausgestaltungen der Antriebseinheit denkbar. In einem bevorzugten Ausführungsbeispiel wird die Bewegung der Antriebswelle an ein Einsatzwerkzeug, das mit einer die Handwerkzeugmaschinenvorrichtung umfassenden Handwerkzeugmaschine verbunden ist, weitergeleitet. Unter "vorgesehen" soll insbesondere speziell ausgestaltet, ausgelegt und/oder ausgestattet verstanden werden. Unter einer "Antriebsweile" soll in diesem Zusammenhang insbesondere ein stabförmiges Element verstanden werden, das dazu vorgesehen ist, eine Bewegung, insbesondere eine Rotationsbewegung, und/oder ein Moment, insbesondere ein Drehmoment, zu übertragen.

In einem Ausführungsbeispiel werden eine Bewegung und/oder ein Moment der Antriebswelle insbesondere über die Getriebeeinheit in einem Betriebszustand an das Einsatzwerkzeug, das mit einer die Handwerkzeugmaschinenvorrichtung umfassenden Handwerkzeugmaschine verbunden ist, weitergeleitet. Die Getriebeeinheit ist vorzugsweise zu einer Änderung der Geschwindigkeit, des Moments und/oder der Bewegungsrichtung vorgesehen. Besonders bevorzugt umfasst die Getriebeeinheit zumindest ein Planetengetriebe zu einer Änderung bzw. zu einer Anpassung der Geschwindigkeit, insbesondere der Rotationsgeschwindigkeit der Motorwelle. Es sind jedoch auch andere, einem Fachmann als sinnvoll erscheinende Ausgestaltungen der Getriebeeinheit denkbar.

Unter einer "Kühleinheit" soll in diesem Zusammenhang insbesondere eine Einheit verstanden werden, die dazu vorgesehen ist, die Handwerkzeugmaschinenvorrichtung, insbesondere die Antriebseinheit, in einem Betriebszustand zu kühlen. Hierzu weist die Kühleinheit vorzugsweise das zumindest eine Lüfterelement auf, das dazu vorgesehen ist, zumindest in dem Betriebszustand der Antriebseinheit, insbesondere rotatorisch, angetrieben zu werden. Dadurch kann ein Fluidstrom zu einer Wärmeabführung innerhalb der Handwerkzeugmaschinenvorrichtung, insbesondere der Antriebseinheit, erzeugt werden. Besonders bevorzugt erzeugt das Lüfterelement in dem Betriebszustand einen Luftstrom. Das Lüfterelement ist vorzugsweise von einem Lüfterrad gebildet. Es sind jedoch auch andere, einem Fachmann als sinnvoll erscheinende Ausgestaltungen der Kühleinheit bzw. des Lüfterelements denkbar.

Unter einer "Dichtung" soll in diesem Zusammenhang eine, insbesondere kraftschlüssige Verbindung zwischen zumindest zwei Elementen verstanden werden, wobei ein Kontaktbereich der zumindest zwei Elemente gegenüber zumindest einem Fluid, insbesondere gegenüber einem Schmiermittel, wie beispielsweise Öl und/oder Fett, undurchlässig ausgebildet ist. Es ist jedoch auch denkbar, dass, alternativ oder zusätzlich, eine Dichtung gegenüber einem anderen Stoff und/oder Stoffgemisch, wie insbesondere gegenüber Staub, Luft und/oder Wasser, vorgesehen ist. Unter einer "Axialrichtung" soll insbesondere eine Richtung verstanden werden, die parallel zu der Antriebswelle der Antriebseinheit verläuft. Unter einem "Aufnahmebereich" soll in diesem Zusammenhang insbesondere ein Bereich verstanden werden, der dazu vorgesehen ist, das zumindest eine Dichtungselement zumindest teilweise, vorzugsweise vollständig aufzunehmen und/oder form-und/oder kraftschlüssig zu halten. In einem besonders bevorzugten Ausführungsbeispiel weist der zumindest eine Aufnahmebereich zumindest eine Materialaussparung, zumindest einen Vorsprung und/oder eine andere, einem Fachmann als sinnvoll erscheinende Anpassung einer Geometrie bzw, einer Kontur des Lüfterelements auf.

Durch die erfindungsgemäße Ausgestaltung kann, insbesondere in eine Axialrichtung, eine bevorzugt platzsparende, kompakte und kleinbauende Ausgestaltung der Handwerkzeugmaschinenvorrichtung erreicht werden. Insbesondere das Dichtungselement kann auf konstruktiv einfache Weise vorteilhaft kompakt in die Handwerkzeugmaschinenvorrichtung, insbesondere ohne eine Baulänge in Axialrichtung wesentlich zu erhöhen, integriert werden. Zudem können vorteilhaft Bauteile und somit Fertigungskosten und ein Montageaufwand eingespart werden.

Des Weiteren wird vorgeschlagen, dass das zumindest eine Dichtungselement zumindest teilweise von einem Dichtungsring gebildet ist. Unter einem "Dichtungsring" soll in diesem Zusammenhang insbesondere ein Dichtungselement verstanden werden, das in zumindest einer Ebene einen Winkelbereich von zumindest 180°, vorzugsweise von zumindest 270° und besonders bevorzugt von zumindest 360° umschließt. In einem besonders bevorzugten Ausführungsbeispiel weist der Dichtungsring eine geschlossene Außen- und/oder Innenkontur auf. Dadurch kann eine konstruktiv einfache, bevorzugt platzsparende und vorteilhaft kostengünstige Dichtung erreicht werden.

Ferner wird vorgeschlagen, dass das zumindest eine Dichtungselement zumindest teilweise aus einem Filz gebildet ist. Unter einem "Filz" soll in diesem Zusammenhang insbesondere ein Werkstoff verstanden werden, der zumindest teilweise, vorzugsweise vollständig aus Fasern, insbesondere aus textilen Fasern, die insbesondere in einer ungeordneten, chaotischen Weise zu einem textilen Flächengebilde verbunden sind, besteht. Dadurch kann eine bevorzugt kostengünstige und robuste Ausgestaltung des zumindest einen Dichtungselements erreicht werden.

Des Weiteren wird vorgeschlagen, dass das zumindest eine Lüfterelement direkt und fest mit dem zumindest einen Getriebeelement verbunden ist. Unter "direkt und fest verbunden" soll insbesondere verstanden werden, dass sich das zumindest eine Lüfterelement und das Getriebeelement zumindest teilweise, vorzugsweise vollständig, insbesondere über eine axiale Erstreckung des Lüfterelements und/oder des Getriebeelements, kontaktieren und/oder formschlüssig aneinander anliegen. In einem besonders bevorzugten Ausführungsbeispiel sind das zumindest eine Lüfterelement und das Getriebeelement unter Vermeidung weiterer Bauteile, insbesondere weiterer Funktionsbauteile, miteinander verbunden. Unter "verbunden" soll in diesem Zusammenhang insbesondere eine durch einen Fügeprozess hergestellte Verbindung zwischen zumindest zwei, insbesondere separat hergestellten Bauteilen verstanden werden. Dadurch kann eine bevorzugt kompakte, konstruktiv einfache und vorteilhaft kostengünstige Verbindung zwischen dem Lüfterelement und dem Getriebeelement erreicht werden.

Zudem wird vorgeschlagen, dass das zumindest eine Lüfterelement zumindest teilweise auf das zumindest eine Getriebeelement aufgepresst ist. Unter "aufgepresst" soll in diesem Zusammenhang verstanden werden, dass das Lüfterelement vor einer Montage mit dem Getriebeelement relativ zu dem Getriebeelement ein Übermaß aufweist und dass zwischen dem Lüfterelement und dem Getriebeelement in einem montierten bzw. aufgepressten Zustand eine kraftschlüssige, insbesondere manuell unlösbare, feste Verbindung, die insbesondere lediglich mithilfe technischer Hilfsmittel und/oder Kühl- bzw. Wärmprozessen lösbar ausgestaltet ist, besteht. In einem besonders bevorzugten Ausführungsbeispiel wird das Lüfterelement bei einer Montage mittels eines Kalt- und/oder Ölpressverfahrens oder mittels eines Aufschrumpf- und/oder Kaltdehnungsverfahrens auf das Getriebeelement aufgepresst. Ferner ist es denkbar, dass das Lüfterelement stoffschlüssig, insbesondere mittels einer Klebeschicht und/oder einer Schweißnaht, und/oder formschlüssig, insbesondere mittels zumindest eines Formschlusselements, mit dem Getriebeelement verbunden ist. Es sind jedoch auch weitere, einem Fachmann als sinnvoll erscheinende Ausgestaltungen der Montage denkbar. Dadurch kann eine bevorzugt sichere, konstruktiv einfache und vorteilhaft kostengünstige Verbindung zwischen dem Lüfterelement und dem Getriebeelement erreicht werden.

Ferner wird vorgeschlagen, dass das zumindest eine Getriebeelement zumindest einen Bereich umfasst, der zumindest teilweise eine Verzahnung aufweist und zumindest einen zylinderförmigen Bereich umfasst. Vorzugsweise sind die Bereiche aneinander angrenzend ausgebildet. Vorzugsweise bildet das Getriebeelement zumindest teilweise ein Zahnrad der Getriebeeinheit. In einem besonders bevorzugten Ausführungsbeispiel bildet das Getriebeelement zumindest teilweise ein Sonnenrad der insbesondere ein Planetengetriebe umfassenden Getriebeeinheit. Dadurch kann auf konstruktiv einfache Weise eine bevorzugte Multifunktionalität des zumindest einen Getriebeelements sowie eine vorteilhaft kompakte Ausgestaltung der Handwerkzeugmaschinenvorrichtung erreicht werden.

Zudem wird vorgeschlagen, dass das zumindest eine Dichtungselement das zumindest eine Getriebeelement in dem zylinderförmigen Bereich zumindest teilweise umschließt. In einem besonders bevorzugten Ausführungsbeispiel umschließt das zumindest eine Dichtungselement das zumindest eine Getriebeelement in dem zylinderförmigen Bereich vollständig. Dadurch kann auf konstruktiv einfache Weise eine bevorzugt sichere und zuverlässige Dichtung erreicht werden.

In einem weiteren Ausführungsbeispiel sind mehrere Mitnahmeelemente vorgesehen, die insbesondere gleichmäßig über einen Umfang des Aufnahmebereichs des Lüfterelements angeordnet sind. Das zumindest eine Mitnahmeelement ist vorzugsweise stoffschlüssig, wie beispielsweise durch Kleben und/oder Anspritzen, mit dem Lüfterelement verbunden. Besonders bevorzugt ist das zumindest eine Mitnahmeelement einstückig mit dem Lüfterelement ausgebildet. Das zumindest eine Mitnahmeelement ist vorzugsweise kegelförmig ausgebildet. Es sind jedoch auch andere, einem Fachmann als sinnvoll erscheinende Formen und Ausgestaltungen des zumindest einen Mitnahmeelements, wie beispielsweise eine stiftförmige, zylinderförmige, pyramidenförmige und/oder hakenförmige Ausgestaltung des zumindest einen Mitnahmeelements, denkbar. Das zumindest eine Mitnahmeelement kann vorzugsweise von einem Anspritzpunkt des Lüfterelements gebildet sein. Unter einem "Anspritzpunkt" soll in diesem Zusammenhang insbesondere ein insbesondere erhabener Bereich, insbesondere eines Spritzgussbauteils, verstanden werden, der von Rückständen, insbesondere von Materialrückständen, insbesondere des Spritzwerkzeugs, aus einem Herstellungsprozesses gebildet ist. Dadurch kann eine bevorzugt zuverlässige, konstruktiv einfache und vorteilhaft kostengünstige Sicherung des Dichtungselements zumindest in Umfangsrichtung des Lüfterelements erreicht werden.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Handwerkzeugmaschine mit einer erfindungsgemäßen Handwerkzeugmaschinenvorrichtung in einer schematischen Darstel- lung und
- Fig. 2: ein Ausschnitt der erfindungsgemäßen Handwerkzeugmaschinenvorrichtung in einer Schnittdarstellung.

### Beschreibung des Ausführungsbeispiels

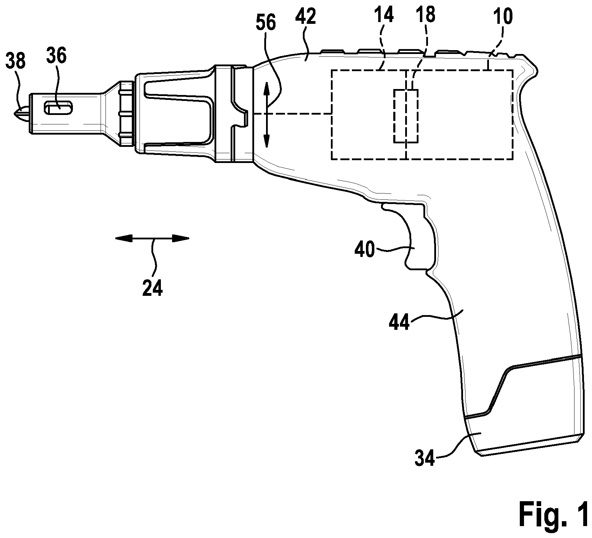

Figur 1 zeigt eine Handwerkzeugmaschine, die einen Akkumulator 34 zu einer Versorgung mit einer elektrischen Spannung der Handwerkzeugmaschine aufweist. Die Handwerkzeugmaschine ist von einem Trockenbauschrauber gebildet. Die Handwerkzeugmaschine weist eine Werkzeugaufnahme 36 auf, die dazu vorgesehen ist, ein Einsatzwerkzeug 38 verliersicher zu halten. Die Handwerkzeugmaschine weist ferner eine schematisch dargestellte Antriebseinheit 10 auf. Die Antriebseinheit 10 umfasst einen nicht näher dargestellten Motor. Der Motor ist von einem Elektromotor gebildet. Die Antriebseinheit 10 ist zu einem Antrieb des in der Werkzeugaufnahme 36 gehaltenen Einsatzwerkzeugs 38 vorgesehen. Das Einsatzwerkzeug 38 wird rotierend angetrieben. Die Handwerkzeugmaschine weist ferner eine schematisch dargestellte Getriebeeinheit 14 auf. Zudem weist die Handwerkzeugmaschine eine schematisch dargestellte Kühleinheit 18 auf, die zu einer Kühlung der Antriebseinheit 10 in einem Betriebszustand vorgesehen ist. Die Handwerkzeugmaschine weist ein Bedienelement 40 auf, mittels dem die Antriebseinheit 10 durch einen Bediener der Handwerkzeugmaschine aktivierbar ist. Das Bedienelement 40 ist in einem Bereich eines Gehäuses 42 der Handwerkzeugmaschine angeordnet, der einen Handgriffbereich 44 bildet. Das Gehäuse 42 der Handwerkzeugmaschine umschließt die Antriebseinheit 10, die Kühleinheit 18 und die Getriebeeinheit 14.

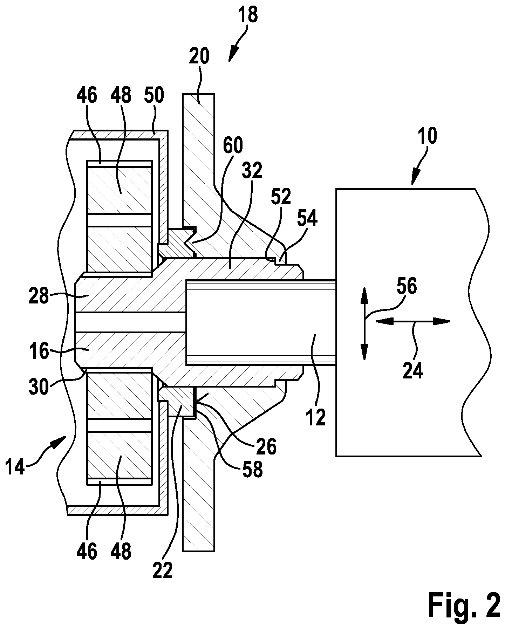

Die Getriebeeinheit 14 umfasst ein Getriebeelement 16, das eine Verzahnung 30 aufweist (Figur 2). Die Getriebeeinheit 14 umfasst ein einem Fachmann bekanntes Planetengetriebe. Das Getriebeelement 16 bildet ein Sonnenrad des Planetengetriebes der Getriebeeinheit 14. Das als Sonnenrad ausgebildete Getriebeelement 16 greift mit der Verzahnung 30 in eine Verzahnung 46 jeweils eines ein Planetenrad bildenden, weiteren Getriebeelements 48 ein. Das Getriebeelement 16 ist aus einem Sintermaterial hergestellt. Die Getriebeeinheit 14 ist von einem schematisch dargestellten Getriebegehäuse 50 umschlossen. Die Getriebeeinheit 14 ist wirkungsmäßig mit der Antriebseinheit 10 verbunden.

Die Antriebseinheit 10 weist eine Antriebswelle 12 auf, mit der das Getriebeelement 16 verbunden ist. Das Getriebeelement 16 ist auf die Antriebswelle 12 der Antriebseinheit 10 aufgepresst. Das Getriebeelement 16 umfasst einen zylinderförmigen Bereich 32 und einen Bereich 28, in dem die Verzahnung 30 angeordnet ist. Der zylinderförmige Bereich 32 und der Bereich 28, in dem die Verzahnung 30 angeordnet ist, sind getrennt voneinander ausgebildet und grenzen aneinander an. Der zylinderförmige Bereich 32 bildet einen Pressschuh. Das Getriebeelement 16 ist mittels des einen Pressschuh bildenden, zylinderförmigen Bereichs 32 auf die Antriebswelle 12 der Antriebseinheit 10 aufgepresst.

Die Kühleinheit 18 weist ein Lüfterelement 20 auf. Das Lüfterelement 20 ist von einem Lüfterrad gebildet. Das Lüfterelement 20 ist aus einem Kunststoff gebildet. Das Lüfterelement 20 ist fest und direkt mit dem Getriebeelement 16 der Getriebeeinheit 14 verbunden. Das Lüfterelement 20 ist auf das Getriebeelement 16 aufgepresst. Das Lüfterelement 20 ist in dem zylinderförmigen Bereich 32 des Getriebeelements 16 angeordnet. In einem Betriebszustand entspricht eine Drehzahl der Antriebswelle 12 der Antriebseinheit 10 einer Drehzahl des Getriebeelements 16 der Getriebeeinheit 14 und einer Drehzahl des Lüfterelements 20 der Kühleinheit 18. Das Lüfterelement 20 ist zu einer Eigenkühlung der Antriebseinheit 10 vorgesehen. Das Getriebeelement 16 weist an einem dem Bereich 28, der die Verzahnung 30 aufweist, abgewandten Ende ein Anschlagselement 52 auf. Das Lüfterelement weist ebenfalls ein Anschlagselement 54 auf, das dazu vorgesehen ist, mit dem Anschlagselement 52 des Getriebeelements 16 zu korrespondieren. Die Anschlagselemente 52, 54 sind dazu vorgesehen, in einem montierten Zustand eine Relativbewegung in eine Axialrichtung 24 zwischen dem Lüfterelement 20 und dem Getriebeelement 16 zu verhindern. Das Anschlagselement 52 des Getriebeelements 16 ist von einer ringförmigen Materialaussparung des zylinderförmigen Bereichs 32 ausgebildet. Das Anschlagselement 54 des Lüfterelements 20 ist von einem ringförmigen Fortsatz gebildet, der sich in einer Radialrichtung 56 nach innen erstreckt. In einem montierten Zustand greift das Anschlagselement 54 des Lüfterelements 20 in das Anschlagselement 52 des Getriebeelements 16 ein und verhindert eine Relativbewegung des Lüfterelements 20 in Axialrichtung 24 zu dem Bereich 28 des Getriebeelements 16 hin, in dem die Verzahnung 30 angeordnet ist.

Die Handwerkzeugmaschinenvorrichtung weist ein Dichtungselement 22 auf. Das Dichtungselement 22 ist in Axialrichtung 24 zwischen dem Lüfterelement 20 und dem Getriebegehäuse 50 angeordnet. Das Dichtungselement 22 ist von einem Dichtungsring gebildet, der aus einem Filz besteht. Das Dichtungselement 22 weist einen rechteckigen Querschnitt auf. Das Dichtungselement 22 ist elastisch verformbar ausgestaltet. Das Dichtungselement 22 ist auf das Getriebeelement 16 in Axialrichtung 24 aufgeschoben und umschließt das Getriebeelement 16 in dem zylinderförmigen Bereich 32. Vor einer Montage des Dichtungselements 22 auf das Getriebeelement 16 weist das Dichtungselement 22 einen geringeren Innendurchmesser als ein Außendurchmesser des zylinderförmigen Bereichs 32 des Getriebeelements 16 auf. Um das Dichtungselement 22 auf das Getriebeelement 16 aufschieben zu können, muss ein Innendurchmesser des Dichtungselements 22 durch Dehnen elastisch vergrößert werden. In einem montierten Zustand zieht sich das Dichtungselement 22 so weit zusammen, dass das Dichtungselement 22 mit einem Innenumfang in Umfangsrichtung an einer Außenseite des zylinderförmigen Bereichs 32 des Getriebeelements 16 anliegt. Das Lüfterelement 20 weist in dem Aufnahmebereich 26 mehrere Mitnahmeelemente 60 auf. Das Lüfterelement 20 weist in dem Aufnahmebereich 26 drei Mitnahmeelemente 60 auf. Die Mitnahmeelemente 60 sind zu einer Sicherung des Dichtungselements 22 in einer Umfangsrichtung des Lüfterelements 20 in einem Betriebszustand vorgesehen. Die Mitnahmeelemente 60 sind gleichmäßig über einen Umfang des Aufnahmebereichs 26 verteilt angeordnet. Die Mitnahmeelemente 60 sind von kegelförmigen Fortsätzen gebildet. Die Mitnahmeelemente 60 sind einstückig mit dem Lüfterelement 20 ausgebildet. In einem montierten Zustand greifen die Mitnahmeelemente 60 in das Dichtungselement 22 ein und bilden eine formschlüssige Drehmitnahme für das Dichtungselement 22 in einem Betriebszustand in Umfangsrichtung. Die Mitnahmeelemente 60 drücken sich dabei in das Material des aus Filz gebildeten Dichtungselements 22 und fixieren dieses formschlüssig in Umfangsrichtung.

Durch ein Aufpressen des Lüfterelements 20 auf das Getriebeelement 16 wird das Dichtungselement 22 in Axialrichtung 24 zu dem Bereich 28, der die Verzahnung 30 aufweist, hin verschoben, sodass das Dichtungselement 22 in Axialrichtung 24 komprimiert wird und gegen das Getriebegehäuse 50 gedrückt wird. Dadurch kann ein Schmiermittelaustritt aus der Getriebeeinheit 14 sicher verhindert werden.

Auf einer dem Anschlagselement 54 in Axialrichtung 24 abgewandten Seite weist das Lüfterelement 20 einen Aufnahmebereich 26 auf, der dazu vorgesehen ist, das Dichtungselement 22 aufzunehmen. Der Aufnahmebereich 26 ist von einer ringförmigen Materialaussparung 58 gebildet. Die Materialaussparung 58 erstreckt sich in Axialrichtung 24 in ein Material des Lüfterelements 20 hinein. Die Materialaussparung 58 erstreckt sich in Radialrichtung 56 von einer Innenseite des Lüfterelements 20 nach außen in ein Material des Lüfterelements 20 hinein. Die Materialaussparung 58 weist einen rechteckigen Querschnitt auf. Der Querschnitt der Materialaussparung 58 des Aufnahmebereichs 26 korrespondiert in einem montierten Zustand des Dichtungselements 22 und des Lüfterelements 20 bezüglich einer Position und der Abmessungen mit einem Querschnitt des Dichtungselements 22. In einem montierten Zustand liegt das Dichtungselement 22 an dem Aufnahmebereich 26 des Lüfterelements 20 eben an. In einem montierten Zustand ist das Dichtungselement 22 in Axialrichtung 24 zwischen dem Getriebegehäuse 50 und dem Lüfterelement 20 verspannt, sodass ein Verrutschen bzw. eine Relativbewegung des Dichtungselements 22 relativ zu dem Getriebegehäuse 50 bzw. dem Lüfterelement 20 verhindert wird.

## Patentansprüche

1. Handwerkzeugmaschinenvorrichtung mit einer Antriebseinheit (10), die zumindest eine Antriebswelle (12) umfasst, mit einer Getriebeeinheit (14), die zumindest ein Getriebeelement (16) umfasst, mit einer Kühleinheit (18), die zumindest ein Lüfterelement (20) umfasst, und mit zumindest einem Dichtungselement (22), das zu einer Dichtung der Getriebeeinheit (14) in zumindest einer Axialrichtung (24) vorgesehen ist, wobei das zumindest eine Lüfterelement (20) zumindest einen Aufnahmebereich (26) aufweist, der dazu vorgesehen ist, das zumindest eine Dichtungselement (22) zumindest teilweise aufzunehmen, **dadurch gekennzeichnet, dass** der Aufnahmebereich (26) zumindest ein Mitnahmeelement (60) aufweist, das zu einer Sicherung des zumindest einen Dichtungselements (22) zumindest in einer Umfangsrichtung des Lüfterelements (20) vorgesehen ist.

2. Handwerkzeugmaschinenvorrichtung nach Anspruch 1, **dadurch gekennzeichnet, dass** das zumindest eine Dichtungselement (22) zumindest teilweise von einem Dichtungsring gebildet ist.

3. Handwerkzeugmaschinenvorrichtung zumindest nach Anspruch 1, **dadurch gekennzeichnet, dass** das zumindest eine Dichtungselement (22) zumindest teilweise aus einem Filz gebildet ist.

4. Handwerkzeugmaschinenvorrichtung nach einem der vorhergehenden Ansprüche, **dadurch gekennzeichnet, dass** das zumindest eine Lüfterelement (20) direkt und fest mit dem zumindest einen Getriebeelement (16) verbunden ist.

5. Handwerkzeugmaschinenvorrichtung nach Anspruch 4, **dadurch gekennzeichnet, dass** das zumindest eine Lüfterelement (20) zumindest teilweise auf das zumindest eine Getriebeelement (16) aufgepresst ist.

6. Handwerkzeugmaschinenvorrichtung nach einem der vorhergehenden Ansprüche, **dadurch gekennzeichnet, dass** das zumindest eine Getriebeelement (16) zumindest einen Bereich (28) umfasst, der zumindest teilweise eine Verzahnung (30) aufweist, und zumindest einen zylinderförmigen Bereich (32) umfasst.

7. Handwerkzeugmaschinenvorrichtung nach Anspruch 6, **dadurch gekennzeichnet, dass** das zumindest eine Dichtungselement (22) das zumindest eine Getriebeelement (16) in dem zylinderförmigen Bereich (32) zumindest teilweise umschließt.

8. Handwerkzeugmaschine mit einer Handwerkzeugmaschinenvorrichtung nach einem der vorhergehenden Ansprüche.

## Claims

1. Hand power tool device, having a drive unit (10), which comprises at least one drive shaft (12), having a transmission unit (14), which comprises at least one transmission element (16), having a cooling unit (18), which comprises at least one fan element (20), and having at least one sealing element (22), which is provided for sealing the transmission unit (14) in at least one axial direction (24), wherein the at least one fan element (20) has at least one receiving region (26), which is provided to receive the at least one sealing element (22), at least partially, **characterized in that** the receiving region (26) has at least one driver element (60), which is provided for securing the at least one sealing element (22), at least in a circumferential direction of the fan element (20).

2. Hand power tool device according to Claim 1, **characterized in that** the at least one sealing element (22) is constituted, at least partially, by a sealing ring.

3. Hand power tool device at least according to Claim 1, **characterized in that** the at least one sealing element (22) is made of a felt, at least partially.

4. Hand power tool device according to any one of the preceding claims, **characterized in that** the at least one fan element (20) is connected directly and fixedly to the at least one transmission element (16).

5. Hand power tool device according to Claim 4, **characterized in that** the at least one fan element (20) is pressed, at least partially, on to the at least one transmission element (16).

6. Hand power tool device according to any one of the preceding claims, **characterized in that** the at least one transmission element (16) comprises at least one region (28) that has a toothing (30), at least partially, and comprises at least one cylindrical region (32).

7. Hand power tool device according to Claim 6, **characterized in that** the at least one sealing element (22) encompasses the at least one transmission element (16) at least partially in the cylindrical region (32).

8. Hand power tool having a hand power tool device according to any one of the preceding claims.

## Revendications

1. Dispositif de machine-outil à main comprenant une unité d'entraînement (10) qui comprend au moins un arbre d'entraînement (12), une unité de transmission (14) qui comprend au moins un élément de transmission (16), une unité de refroidissement (18) qui comprend au moins un élément de ventilateur (20) et au moins un élément d'étanchéité (22) qui est prévu pour étanchéifier l'unité de transmission (14) dans au moins une direction axiale (24), l'au moins un élément de ventilateur (20) présentant au moins une région de réception (26) qui est prévue pour recevoir au moins en partie au moins un élément d'étanchéité (22), **caractérisé en ce que** la région de réception (26) présente au moins un élément d'entraînement (60) qui est prévu pour fixer l'au moins un élément d'étanchéité (22) au moins dans une direction périphérique de l'élément de ventilateur (20) .

2. Dispositif de machine-outil à main selon la revendication 1, **caractérisé en ce qu'**au moins un élément d'étanchéité (22) est formé au moins en partie par une bague d'étanchéité.

3. Dispositif de machine-outil à main au moins selon la revendication 1, **caractérisé en ce que** l'au moins un élément d'étanchéité (22) est formé au moins en partie à partir d'un feutre.

4. Dispositif de machine-outil à main selon l'une quelconque des revendications précédentes, **caractérisé en ce que** l'au moins un élément de ventilateur (20) est connecté directement et fixement à l'au moins un élément de transmission (16) .

5. Dispositif de machine-outil à main selon la revendication 4, **caractérisé en ce que** l'au moins un élément de ventilateur (20) est pressé au moins partiellement sur l'au moins un élément de transmission (16).

6. Dispositif de machine-outil à main selon l'une quelconque des revendications précédentes, **caractérisé en ce que** l'au moins un élément de transmission (16) comprend au moins une région (28) qui présente au moins en partie une denture (30) et comprend au moins une région de forme cylindrique (32).

7. Dispositif de machine-outil à main selon la revendication 6, **caractérisé en ce que** l'au moins un élément d'étanchéité (22) entoure au moins en partie l'au moins un élément de transmission (16) dans la région de forme cylindrique (32).

8. Machine-outil à main comprenant un dispositif de machine-outil à main selon l'une quelconque des revendications précédentes.
